(19) **Europäisches Patentamt / European Patent Office / Office européen des brevets**

(11) **EP 3 899 472 B1**

(12) **FASCICULE DE BREVET EUROPEEN**

(45) Date de publication et mention
de la délivrance du brevet:
**11.03.2026 Bulletin 2026/11**

(21) Numéro de dépôt: **19848798.5**

(22) Date de dépôt: **19.12.2019**

(51) Classification Internationale des Brevets (IPC):
**G01M 3/00** *(2006.01)*    **F17C 3/02** *(2006.01)*
**G01M 3/22** *(2006.01)*    **F17C 13/02** *(2006.01)*

(52) Classification Coopérative des Brevets (CPC):
**G01M 3/002; F17C 3/027; F17C 13/026;
G01M 3/226;** F17C 2201/0157; F17C 2201/052;
F17C 2203/0304; F17C 2203/0379;
F17C 2203/0631; F17C 2221/033; F17C 2223/0161;
F17C 2223/033; F17C 2227/0114; F17C 2250/038;
F17C 2250/0439;                              (Cont.)

(86) Numéro de dépôt international:
**PCT/FR2019/053212**

(87) Numéro de publication internationale:
**WO 2020/128370 (25.06.2020 Gazette 2020/26)**

(54) **PROCEDE DE CONTROLE DE L'ETANCHEITE D'UNE CUVE ETANCHE ET THERMIQUEMENT ISOLANTE DE STOCKAGE D'UN FLUIDE**

VERFAHREN ZUR DICHTHEITSPRÜFUNG EINES DICHTEN UND WÄRMEISOLIERENDEN BEHÄLTERS ZUR AUFBEWAHRUNG EINES FLUIDS

METHOD FOR CHECKING THE LEAKPROOFNESS OF A LEAKPROOF AND THERMALLY INSULATING TANK FOR STORING A FLUID

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.12.2018 FR 1873900**

(43) Date de publication de la demande:
**27.10.2021 Bulletin 2021/43**

(73) Titulaire: **Gaztransport et Technigaz
78470 Saint-Rémy-lès-Chevreuse (FR)**

(72) Inventeurs:
- **CHAMPAGNAC, Maxime
  78470 SAINT REMY LES CHEVREUSE (FR)**
- **JOLIVET, Pierre
  78470 SAINT REMY LES CHEVREUSE (FR)**
- **PETITPAS, Matthieu
  78470 SAINT REMY LES CHEVREUSE (FR)**
- **BLEOMELEN, Mael
  78470 SAINT REMY LES CHEVREUSE (FR)**
- **BRENAC, Damien
  78470 SAINT REMY LES CHEVREUSE (FR)**
- **SPITTAEL, Laurent
  78470 SAINT REMY LES CHEVREUSE (FR)**
- **BRIATTE, Vincent
  78470 SAINT REMY LES CHEVREUSE (FR)**
- **GLORY, Julien
  78470 SAINT REMY LES CHEVREUSE (FR)**

(74) Mandataire: **Loyer & Abello
9, rue Anatole de la Forge
75017 Paris (FR)**

(56) Documents cités:
EP-A1- 0 102 865      WO-A1-2018/129571
FR-A1- 2 294 439      FR-A1- 2 515 347
FR-A5- 2 202 595      GB-A- 888 247

(52) Classification Coopérative des Brevets (CPC):
(Cont.)F17C 2250/0443; F17C 2250/0491;
F17C 2250/0626; F17C 2260/038; F17C 2270/0107

## Description

### Domaine technique

L'invention appartient au domaine des cuves étanches et thermiquement isolantes, à membranes. En particulier, l'invention se rapporte au domaine des cuves étanches et thermiquement isolantes pour le stockage et/ou le transport de liquide à basse température, telles que des cuves pour le transport de Gaz de Pétrole Liquéfié (aussi appelé GPL) présentant par exemple une température comprise entre -50°C et 0°C, ou pour le transport de Gaz Naturel Liquéfié (GNL) à environ -162°C à pression atmosphérique. Ces cuves peuvent être installées à terre ou sur un ouvrage flottant. Dans le cas d'un ouvrage flottant, la cuve peut être destiné au transport de gaz liquéfié à basse température ou à recevoir du gaz liquéfié à basse température servant de carburant pour la propulsion de l'ouvrage flottant. Plus particulièrement l'invention se rapporte à des dispositifs et procédés pour détecter des fuites dans une membrane secondaire d'une telle cuve.

### Arrière-plan technologique

Les cuves des navires pour le transport de gaz naturel liquéfié comprennent généralement une structure porteuse qui apporte la rigidité mécanique, une membrane d'étanchéité primaire destinée à être en contact avec le produit contenu dans la cuve, et une membrane d'étanchéité secondaire agencée entre la membrane d'étanchéité primaire et la structure porteuse. La membrane d'étanchéité secondaire est destinée à retenir le produit en cas de fuite dans la membrane d'étanchéité primaire. L'espace entre la membrane d'étanchéité primaire et la membrane secondaire est appelé espace primaire et l'espace entre la membrane d'étanchéité secondaire et la structure porteuse est appelé espace secondaire.

La membrane d'étanchéité secondaire est invisible et inaccessible une fois la cuve fabriquée. Ainsi il est impossible d'observer directement d'éventuels défauts de cette membrane tels qu'une rayure, une dislocation locale de la membrane ou encore un canal d'air entre deux pièces composant la membrane.

Plusieurs méthodes ont donc été établies pour diagnostiquer l'étanchéité de la membrane secondaire.

Le document FR2946428 décrit un procédé de test d'étanchéité de la cuve, notamment de la localisation de fuites de la membrane secondaire, dans lequel, l'espace primaire contient un premier gaz incondensable ou ayant une température de condensation inférieure à la température moyenne de la membrane primaire. Ce procédé comprend une étape d'injection d'un deuxième gaz ayant une température de condensation supérieure à la température moyenne de la membrane primaire dans l'espace secondaire, une étape de mise en surpression de l'espace secondaire par rapport à l'espace primaire, et une étape de détection d'un ou des éventuels points chauds de la membrane primaire correspondant à un dépôt du deuxième gaz condensé au contact de la membrane primaire. Grâce à ces caractéristiques, en cas de non-conformité de la membrane secondaire, le deuxième gaz s'échappe dans l'espace primaire et entre en contact avec la membrane primaire, à proximité de la fuite. Comme il présente une température de condensation supérieure à la température moyenne de la membrane primaire, le deuxième gaz se condense et, ce faisant, il transfert de l'énergie sous forme de chaleur, correspondant à sa chaleur latente de changement d'état, à la membrane primaire. Un point chaud est donc généré sur la membrane primaire. La détection de ce point chaud de l'intérieur de la cuve permet la localisation de la non-conformité de la membrane secondaire. Toutefois ce procédé ne s'applique que si la cuve est vide. Or pour des questions sécurité, il est important de pouvoir aussi détecter une fuite se créant alors que la cuve est pleine.

Alternativement le document FR2294439 décrit un procédé de test de l'étanchéité d'une membrane secondaire d'une cuve consistant tout d'abord à créer entre l'espace secondaire et l'espace primaire une différence de température obtenue en utilisant des dispositifs de chauffage appropriés, et à créer une différence de pression, obtenue par tout moyen approprié, entre ces deux espaces. Ainsi les courants de fuite à travers la membrane d'étanchéité secondaire sont amplifiés et par conséquent les gradients de température sur la surface extérieure de la cuve. La détection du gradient de température sur la surface extérieure de la cuve se fait au moyen d'une caméra thermographique. Ce procédé est néanmoins énergivore pour créer et maintenir la différence de température entre les deux espaces.

Le document GB888247A décrit un procédé de contrôle de l'étanchéité d'un dispositif pour l'emmagasinage de liquides à des températures très basses. Le procédé consiste en une surveillance de la pression au sein de l'espace primaire et de l'espace secondaire du dispositif en utilisant une pompe à gaz, un compteur de débit et/ou un indicateur de pression afin de détecter une variation de la pression. Ce procédé est réalisé sur un dispositif comprenant notamment un réservoir métallique autoporteur.

Le document FR25153747A1 décrit un procédé de détection et de localisation de micro-fuites dans une paroi et notamment dans la barrière secondaire des cuves de méthaniers. Le document EP0102865A1 décrit un réservoir de gaz liquéfié muni d'un dispositif de détection des fuites. Le document FR2202595 décrit un dispositif et un procédé de détection d'une défectuosité dans un système de calorifugeage.

**Résumé**

Une idée à la base de l'invention est de fournir des dispositifs et procédés pour détecter des fuites dans une cuve étanche et thermiquement isolante remplie de liquide à basse température ne présentant pas ces inconvénients. Ainsi un but de l'invention est de pouvoir localiser les porosités anormales de la membrane étanche secondaire, même lorsque le débit de fuite est très élevé. L'invention à pour objet un procédé selon la revendication 1 et une installation selon la revendication 7.

A cet effet, la présente invention a pour objet un procédé de contrôle de l'étanchéité d'une cuve étanche et thermiquement isolante de stockage d'un gaz liquéfié à basse température, la cuve étant à basse température, la cuve comportant une structure porteuse présentant une coque interne et une coque externe, un espace confiné entre la coque interne et la coque externe, une membrane d'étanchéité primaire destinée à être en contact avec le gaz liquéfié à basse température contenu dans la cuve, et une membrane d'étanchéité secondaire agencée entre la membrane d'étanchéité primaire et la coque interne, un espace primaire entre la membrane d'étanchéité primaire et la membrane d'étanchéité secondaire et un espace secondaire entre la membrane d'étanchéité secondaire et la coque interne, l'espace primaire comprenant une entrée primaire de gaz et une sortie primaire de gaz, l'espace secondaire comprenant une entrée secondaire de gaz et une sortie secondaire de gaz. Le procédé comprend les étapes principales consistant à générer une pression inférieure à la pression de l'espace primaire dans l'espace secondaire grâce à un dispositif d'aspiration relié à sortie secondaire de gaz, mesurer la température d'une surface extérieure de la coque interne depuis l'espace confiné situé autour de la coque interne, détecter la localisation d'un défaut d'étanchéité de la membrane d'étanchéité secondaire sous la forme d'un point froid sur la surface extérieure de la coque interne.

Le procédé de détection de fuite dans une membrane secondaire est mis en oeuvre dans une cuve à basse température. L'espace primaire est sous pression notamment au moyen d'un gaz inerte tel que l'azote, et l'espace secondaire est maintenu à une pression plus basse par rapport à celle de l'espace primaire grâce au dispositif d'aspiration. En présence d'un défaut local d'étanchéité dans la membrane secondaire, un flux de gaz migre localement de l'espace primaire vers l'espace secondaire. Comme l'espace primaire est au contact de la membrane d'étanchéité primaire et qu'elle-même est au contact du gaz liquéfié à basse température, le gaz venant de l'espace primaire est froid. Le flux de gaz arrivant localement dans l'espace secondaire peut être détecté sous la forme d'un point froid sur la coque interne du navire. Chaque point froid est relevé comme une zone de fuite probable de la membrane. Ce procédé permet de détecter les fuites dans la **membrane** secondaire même lorsqu'il est difficile de faire monter la pression dans l'espace primaire, par exemple à cause d'un débit de fuite très élevé.

On entend par « gaz liquéfié à basse température » tout corps qui est à l'état de vapeur dans les conditions normales de pression et de température et qui a été placé dans l'état liquide par abaissement de sa température.

On entend par « espace confiné » les ballasts, les quilles tubulaires, les batardeaux, les coursives et le pont de fermeture de la cuve aussi appelé « trunk deck ».

On entend par une cuve à basse température une cuve dans laquelle le gaz liquéfié à basse température occupe au moins 20% du volume de la cuve, de préférence 70% ou une cuve ne contenant pas de chargement de gaz liquéfié, soit un volume inférieur à 20% du volume de la cuve, mais alors, dans ce cas, la cuve est refroidie à l'aide d'une pulvérisation (« spraying »), ou projection, d'un gaz liquéfié à basse température, tel que par exemple de l'azote liquide ou du GNL.

Selon un mode de réalisation, la membrane d'étanchéité primaire repose directement sur des matériaux isolants contenus dans l'espace primaire et la membrane d'étanchéité secondaire repose directement sur des matériaux isolants contenus dans l'espace secondaire.

Selon un mode de réalisation, la pression de gaz au-dessus de la phase liquide dans la cuve remplie de gaz liquéfié à basse température est supérieure d'au moins 5000 Pa à la pression atmosphérique.

Selon un mode de réalisation, le procédé comprend en outre une étape consistant à injecter un gaz inerte dans l'espace primaire à partir de l'entrée primaire de gaz.

Selon un mode de réalisation, l'injection de gaz inerte est effectuée par un compresseur.

Selon un mode de réalisation, l'injection de gaz inerte est effectuée à une pression comprise entre 3 et 8 bars.

Selon un mode de réalisation, la sortie primaire de gaz est en position fermée pendant les étapes principales.

Selon un mode de réalisation, l'espace primaire présente une entrée de gaz additionnelle et l'injection de gaz inerte est en plus effectuée par l'entrée de gaz additionnelle.

Selon un mode de réalisation, l'entrée secondaire de gaz est en position fermée.

Selon un mode de réalisation, l'espace secondaire présente une deuxième sortie secondaire de gaz, la deuxième sortie secondaire de gaz étant en position ouverte en plus de la sortie secondaire de gaz.

Selon l'invention, la différence de pression entre l'espace primaire et l'espace secondaire est comprise entre 2100 Pa et 2900 Pa, l'espace primaire étant en surpression de ladite différence de pression par rapport à l'espace secondaire.

Cette gamme d'écart de pression entre l'espace primaire et l'espace secondaire permet de générer un écoulement de gaz suffisant permettant de détecter une fuite sans risque d'arracher ou d'endommager la membrane primaire.

Selon l'invention, le procédé comprend en outre une étape intermédiaire consistant à mesurer la température de la surface extérieure de la coque interne depuis l'espace confiné lorsqu'une différence de pression entre l'espace primaire et l'espace secondaire est comprise entre 800 Pa et 1200 Pa, l'espace primaire étant en surpression de ladite différence de pression par rapport à l'espace secondaire. Cela permet de tester l'intégrité de la coque intérieure avant les étapes principales.

Selon un mode de réalisation, les pressions de l'espace primaire et de l'espace secondaire sont maintenues stables pendant l'étape consistant à mesurer la température de la surface extérieure de la coque interne lors de l'étape principale de mesure de température et de l'étape intermédiaire de mesure de température.

Selon un mode de réalisation, le procédé comprend en outre une étape préliminaire consistant à mesurer la température de la surface extérieure de la coque interne depuis l'espace confiné dans des conditions normales de fonctionnement de la cuve. Cette étape permet de s'assurer l'absence de point froid dans les conditions normales de fonctionnement de la cuve.

On appelle « conditions normales de fonctionnement de la cuve » les conditions dans lesquelles la cuve est utilisée normalement. La pression de l'espace primaire peut être inférieure à l'espace secondaire, par exemple de quelques mbar (millibars), par exemple de 2 à 7 mbar, ou encore la pression de l'espace primaire peut être supérieure à la pression de l'espace secondaire, par exemple de 0 à 4 mbar.

L'étape préliminaire se déroule avant les étapes principales.

Selon un mode de réalisation, l'étape intermédiaire se déroule avant les étapes principales et après l'étape préliminaire.

Selon l'invention, le procédé comprend en outre une étape ultérieure à l'étape principale de mesure de température consistant à mesurer la température de la surface extérieure de la coque interne depuis l'espace confiné dans les conditions normales de fonctionnement de la cuve. Cela permet de connaitre si la cuve peut être utilisée dans les conditions normales de fonctionnement suite aux étapes principales.

L'étape ultérieure se déroule après les étapes principales.

Selon un mode de réalisation, la mesure de température de la surface extérieure de la coque interne depuis l'espace confiné est effectuée par un photodétecteur.

Selon un mode de réalisation, la valeur de température mesurée de la surface extérieure de la coque interne est corrigée pour prendre en compte l'émissivité de la surface extérieure de la coque interne.

Selon un mode réalisation, la durée de chaque étape de mesure de température est d'au plus 5 heures, préférentiellement d'au plus 3h. Cette durée est classiquement prévue pour éviter un refroidissement trop important de la coque interne en dessous des températures tolérées par le matériau composant la coque interne.

Le procédé selon l'invention peut comprendre en outre une étape de stabilisation des pressions dans l'espace primaire et l'espace secondaire, une étape de mesure du débit de gaz inerte injecté dans l'espace primaire, une étape de mesure de débit de gaz inerte sortant de l'espace secondaire, et une étape de comparaison du débit de gaz inerte injecté dans l'espace primaire avec le débit de gaz inerte sortant de l'espace secondaire de manière à identifier et quantifier le débit de gaz inerte passant à travers la membrane et déterminer ainsi une éventuelle porosité de la membrane secondaire.

Dans un navire, la cuve, par exemple sur sa paroi supérieure, présente des structures appelées dôme vapeur et dôme liquide. Elles peuvent prendre la forme de deux tourelles destinées à faire passer des équipements de manutention de cargaison pour manutentionner une phase liquide et une phase vapeur du gaz liquéfié à basse température contenu dans la cuve. En raison de cette géométrie, des méthodes de détection de fuites basées sur l'observation de zones anormalement chaudes ou anormalement froides peuvent être mises en échec, notamment à cause de l'influence des conditions climatiques extérieures et parce que les champs de température dans et au voisinage de ces tourelles peuvent être très complexes. En effectuant une surveillance des débits de gaz inerte entrant dans l'espace primaire et sortant de l'espace secondaire par ajouts de débitmètres au niveau de l'entrée primaire de gaz et de la sortie secondaire de gaz et une comparaison des valeurs de ces débits, il est alors possible de détecter s'il y a effectivement une fuite dans la cuve.

Selon un mode de réalisation, les étapes précédentes peuvent être effectuées après les étapes principales. Cela permet de localiser une éventuelle fuite du dôme de gaz et du dôme liquide lorsqu'aucune fuite n'a été détectée partout ailleurs par les mesures de température.

Selon un mode de réalisation, les étapes de mesure de débits sont effectuées simultanément aux étapes principales. Cela permet de raccourcir la durée totale du procédé de détection de fuite et de réduire la consommation de gaz inerte pendant toute la durée du procédé.

Selon un mode de réalisation, la mesure du débit de gaz inerte injecté dans l'espace primaire est effectuée à l'entrée primaire de gaz par un débitmètre.

Selon un mode de réalisation, la mesure du débit de gaz inerte sortant de l'espace secondaire est effectué à la sortie secondaire de gaz par un débitmètre.

Selon un mode de réalisation, seules l'entrée primaire de gaz et la sortie secondaire de gaz sont ouvertes, les autres entrées de gaz et les autres sorties de gaz étant fermées.

Selon un mode de réalisation, l'entrée primaire de gaz est située sur le dôme liquide.

Selon un mode de réalisation, la sortie secondaire de gaz est située sur le dôme gaz.

Cela permet d'utiliser pour ces procédés de détection de fuites des lignes d'inertage également présentes dans les dômes pour inerter les espaces primaire et secondaire.

Selon un mode de réalisation, le gaz inerte est choisi parmi le diazote, l'hélium, l'argon et leur mélange.

Selon un mode de réalisation, le gaz liquéfié à basse température est choisi parmi le Gaz Naturel Liquéfié, le Gaz de Pétrole Liquéfié, l'éthane liquide, le propane liquide, l'azote liquide, le dioxygène liquide, l'argon liquide, le xénon liquide, le néon liquide et l'hydrogène liquide.

Un tel procédé peut être utilisé dans une structure flottante, côtière ou en eau profonde, notamment un navire méthanier, une unité flottante de stockage et regazéification (FSRU), une unité flottante de production et de stockage déporté (FPSO) et autres. Une telle installation de stockage peut aussi servir de réservoir de carburant dans tout type de navire.

Selon un mode de réalisation, l'invention fournit une installation de stockage flottante ou terrestre d'un gaz liquéfié à basse température comportant une cuve à basse température comportant une structure porteuse présentant une coque interne et une coque externe, l'espace entre la coque interne et la coque externe étant appelé espace de ballast, une membrane d'étanchéité primaire destinée à être en contact avec le gaz liquéfié à basse température contenu dans la cuve, et une membrane d'étanchéité secondaire agencée entre la membrane d'étanchéité primaire et la coque interne, l'espace entre la membrane d'étanchéité primaire et la membrane d'étanchéité secondaire est appelé espace primaire et l'espace entre la membrane d'étanchéité secondaire et la coque interne est appelé espace secondaire, l'espace primaire comprenant une entrée primaire de gaz et une sortie primaire de gaz, l'espace secondaire comprenant une entrée secondaire de gaz et une sortie secondaire de gaz. Cette installation comporte en outre un réservoir de gaz inerte agencé de manière à injecter le gaz inerte dans l'espace primaire, un dispositif d'injection apte à injecter le gaz inerte du réservoir de gaz inerte par l'entrée primaire de gaz, et ainsi à mettre sous pression l'espace primaire par rapport à l'espace secondaire, un dispositif d'aspiration connecté à la sortie secondaire de gaz pour créer une pression inférieure à la pression atmosphérique dans l'espace secondaire, un dispositif de mesure de température de la surface extérieure de la coque interne, et un système d'affichage des mesures de température afin de localiser un défaut d'étanchéité de la membrane d'étanchéité secondaire sous la forme d'un point froid sur la surface extérieure de la coque interne.

Selon un mode de réalisation, l'épaisseur de la membrane d'étanchéité primaire est inférieure ou égale à 1.5 mm (millimètre), par exemple ladite épaisseur est inférieure ou égale à 1.2 mm.

Selon un mode de réalisation, l'épaisseur de la membrane d'étanchéité secondaire est inférieure ou égale à 1.5 mm (millimètre), par exemple ladite épaisseur est inférieure ou égale à 1.2 mm.

Selon un mode de réalisation, le dispositif d'aspiration comprend un système d'aspiration par effet Venturi comprenant une conduite principale présentant une entrée apte à être reliée à une source de gaz sous pression et une sortie vers l'extérieur de la cuve, une conduite d'aspiration présentant un côté amont apte à être relié au port de sortie de l'espace secondaire et un côté aval débouchant latéralement dans un convergent-divergent de la conduite principale de manière à ce qu'un flux de gaz dans la conduite principale produise une dépression dans la conduite d'aspiration.

Selon un mode de réalisation, le dispositif d'aspiration comprend une pluralité de systèmes d'aspiration par effet Venturi, ces systèmes étant de préférence disposés en série afin d'accroître la capacité d'aspiration.

Selon un mode de réalisation, les systèmes d'aspiration par effet Venturi sont disposés en étage.

Selon un mode de réalisation, la conduite d'aspiration est reliée à la sortie secondaire de gaz.

Selon un mode de réalisation, la source de gaz sous pression est un circuit d'air comprimé.

Selon un mode de réalisation, le dispositif d'injection est un compresseur apte à injecter le gaz inerte à une pression comprise entre 3 et 8 bars.

Selon un mode de réalisation, le dispositif de mesure de température est un photodétecteur.

Selon un mode de réalisation, le photodétecteur est une caméra avec un capteur infrarouge.

Selon un mode de réalisation, le capteur infrarouge est refroidi par des techniques de cryogénie, par exemple le capteur est enfermé dans une enceinte ou enfermé dans un vase Dewar, ou refroidi par un dispositif à effet Stirling. Cet abaissement de la température du capteur permet réduire le bruit thermique.

Selon un mode de réalisation, l'invention fournit un navire pour le transport d'un gaz liquéfié à basse température, comportant une installation de stockage flottante précitée.

Selon un mode de réalisation, l'invention fournit aussi un procédé de chargement ou déchargement d'un tel navire, dans lequel on achemine un gaz liquéfié à basse température à travers des canalisations isolées depuis ou vers une installation de stockage flottante ou terrestre vers ou depuis la cuve du navire.

Selon un mode de réalisation, l'invention fournit aussi un système de transfert pour un gaz liquéfié à basse température, le système comportant le navire précité, des canalisations isolées agencées de manière à relier la cuve installée dans la coque du navire à une installation de stockage flottante ou terrestre et une pompe pour entrainer un flux de gaz liquéfié à basse température à travers les canalisations isolées depuis ou vers l'installation de stockage flottante ou terrestre vers ou depuis l'installation de stockage du navire.

## Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.

[Fig.1] La figure 1 est une représentation schématique écorchée d'une cuve de navire.

[Fig.2] La figure 2 est un schéma fonctionnel d'une cuve de navire vue en coupe selon un axe longitudinal du navire.

[Fig.3] La figure 3 est un schéma du principe du procédé de l'invention.

[Fig.4] La figure 4 est une représentation schématique du circuit de circulation de diazote dans une installation de stockage.

[Fig.5] La figure 5 est une représentation schématique de l'écoulement de diazote de l'espace primaire à l'espace secondaire dû à une porosité anormale de la membrane d'étanchéité.

[Fig.6] La figure 6 est une représentation schématique de la disposition du système d'aspiration à effet Venturi par rapport à l'espace secondaire.

[Fig.7] La figure 7 est une représentation agrandie en coupe de la zone IV de la figure 6.

[Fig.8] La figure 8 est une représentation d'un thermogramme obtenu selon le procédé de l'invention.

[Fig.9] La figure 9 est une représentation de l'agencement d'un débitmètre à une entrée primaire de gaz de l'espace primaire.

[Fig.10] La figure 10 est une représentation de l'agencement d'un débitmètre à une sortie secondaire de gaz de l'espace secondaire.

[Fig.11] La figure 11 est une représentation schématique écorchée d'une installation de stockage d'un gaz liquéfié à basse température de navire méthanier et d'un terminal de chargement/déchargement d'une cuve de l'installation de stockage d'un gaz liquéfié à basse température.

## Description des modes de réalisation

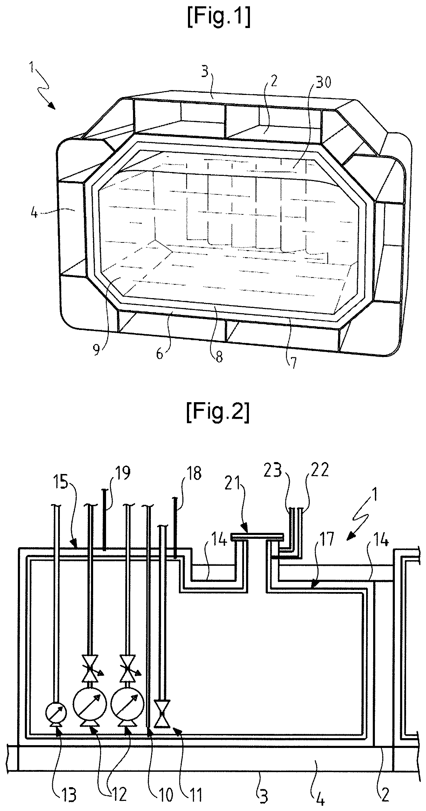

En référence à la figure 1, on a représenté schématiquement une coupe transversale d'une cuve 1 d'un navire méthanier réalisée selon la technologie des cuves à membrane. Un navire peut ainsi comporter une ou plusieurs cuves similaires. Cette cuve est destinée au transport de gaz liquéfié à basse température 30. Un gaz liquéfié à basse température est à l'état de vapeur dans les conditions normales de pression et de température et est placé dans l'état liquide par abaissement de sa température notamment pour son transport. Ce gaz liquéfié à basse température pourra être du Gaz Naturel Liquéfié, du Gaz de Pétrole Liquéfié, de l'éthane liquide, du propane liquide, de l'azote liquide, du dioxygène liquide, de l'argon liquide, du xénon liquide, fu néon liquide ou encore de l'hydrogène liquide.

La cuve 1 comprend une structure porteuse apportant la rigidité mécanique. La structure porteuse est une double paroi comprenant une coque intérieure 2 et une coque extérieure 3. La coque intérieure 2 et la coque extérieure 3 délimitent un espace confiné 4 dont les dimensions sont suffisantes pour que des êtres humains puissent s'y mouvoir.

L'espace confiné 4 regroupe les ballasts, les quilles tubulaires, les batardeaux, les coursives et le pont de fermeture de la cuve 1 aussi appelé « trunk deck »

La cuve 1 comprend en outre une membrane d'étanchéité primaire 9 destinée à être en contact avec le produit contenu dans la cuve, et une membrane d'étanchéité secondaire 7 agencée entre la membrane d'étanchéité primaire 9 et la coque interne 2. La membrane d'étanchéité secondaire 7 est destinée à retenir le produit en cas de fuite dans la membrane d'étanchéité primaire 9. L'espace entre la membrane d'étanchéité primaire 9 et la membrane d'étanchéité secondaire 7 est appelé espace primaire 8 et l'espace entre la membrane d'étanchéité secondaire 7 et la coque interne 2 est appelé espace secondaire 6.

L'espace primaire 8 et l'espace secondaire 6 comprennent des matériaux isolants se présentant sous forme de panneaux juxtaposés en matière thermiquement isolante. Ces panneaux peuvent être en résine synthétique expansée ou cellulaire ou en un autre matériau thermiquement isolant, naturel ou synthétique. De plus ces espaces 6, 8 comprennent un matériau de remplissage tel que de la laine de verre ou de la laine minéral. Ce matériau de remplissage peut être destiné à être inséré entre les panneaux juxtaposés.

La membrane d'étanchéité primaire 9 repose directement sur les matériaux isolants de l'espace primaire 8, et la membrane d'étanchéité secondaire 7 repose directement sur les matériaux isolants de l'espace secondaire 6.

En référence à la figure 2, la cuve comporte une paroi supérieure 14 laquelle est interrompue en deux emplacements par deux structures saillantes en forme de tourelle ou de cheminée. Elles sont destinées à faire passer des équipements de manutention de cargaison pour manutentionner une phase liquide et une phase vapeur du gaz liquéfié à basse température en vue de son stockage dans la cuve. La première tourelle est un dôme liquide 15 qui sert de point de pénétration pour les divers équipements de manutention à savoir dans l'exemple représenté une ligne de remplissage 10, une ligne de pompage d'urgence 11, des lignes de déchargement liées à des pompes de déchargement 12, une ligne de pulvérisation (non représentée) et une ligne d'alimentation liée à une pompe de pulvérisation 13. La deuxième tourelle est un dôme vapeur 21 qui sert de point de pénétration pour une conduite collectrice de vapeur. Le fonctionnement de ces équipements est connu par ailleurs.

L'espace primaire 8 comprend une entrée primaire 18 de gaz et une sortie primaire 26 de gaz. Il peut comprendre en outre une deuxième entrée primaire 22 de gaz. L'espace secondaire 6 comprend une entrée secondaire 25 de gaz et une sortie secondaire 19 de gaz. L'espace secondaire 6 peut comprendre en outre une deuxième sortie secondaire 20 de gaz et une troisième sortie secondaire 23 de gaz.

La cuve peut comprendre en outre une soupape de sécurité 24 en cas de surpression dans les espaces primaire 8 et secondaire 6.

La membrane d'étanchéité secondaire 7 est invisible et inaccessible une fois la cuve fabriquée. Le procédé de contrôle de l'étanchéité d'une cuve selon l'invention permet de détecter et localiser les défauts de la membrane d'étanchéité secondaire 7 et convient à la plupart des technologies de cuve.

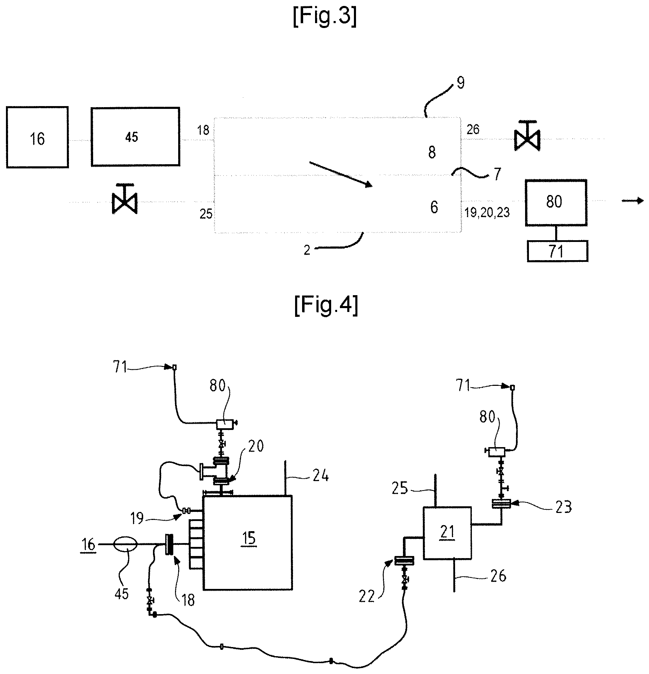

En se référant à la figure 3, le procédé repose sur l'utilisation d'un gradient thermique généré entre les espaces primaire 8 et secondaire 6 d'une cuve 1 chargée de gaz liquéfié à basse température 30 pour détecter par imagerie thermique ou thermographie l'impact sur la coque intérieure 2 d'un gaz inerte traversant la membrane d'étanchéité secondaire 7. La cuve est chargée à au moins 20% de sa capacité totale en gaz liquéfié à basse température ou est refroidie par pulvérisation d'un liquide cryogénique.

En se référant aussi à la figure 4, pour mettre en œuvre les étapes principales du procédé, un dispositif d'injection 45 est installé à l'entrée primaire 18 de gaz et rattaché au réservoir de gaz inerte 16. Le gaz inerte est par exemple du diazote. Ce dispositif d'injection 45 permettra d'injecter le gaz inerte dans l'espace primaire 8. Un dispositif d'aspiration 80 est aussi installé au niveau de la sortie secondaire 19 de gaz. Cela permettra de faciliter la création d'un différentiel de pression entre l'espace primaire 8 et l'espace secondaire 6 même si la porosité de la membrane d'étanchéité secondaire 7 est très importante.

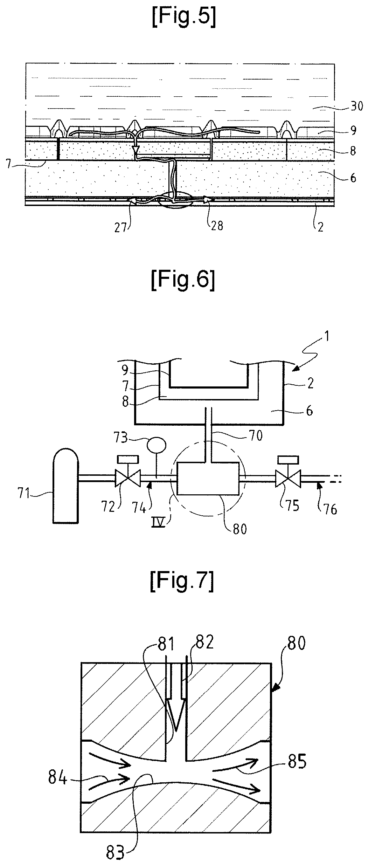

Le dispositif d'aspiration peut être par exemple un système de type Venturi. Il sera alors aussi connecté au système d'air comprimé 71 du bateau. En référence aux figures 6 et 7, le fonctionnement du système de type Venturi va être décrit. Lorsque les vannes 72 et 75 sont ouvertes, un flux d'air comprimé pénètre dans le côté entrée du convergent-divergent, comme indiqué par les flèches 84 et provoque par effet Venturi une dépression dans la canalisation latérale 81 du système d'aspiration à effet Venturi 80 qui est reliée à la canalisation de prélèvement 70 relié à la sortie secondaire 19 de gaz de l'espace secondaire 6. Il s'ensuit l'aspiration d'une quantité de gaz inerte contenu dans l'espace secondaire 6, comme indiqué par la flèche 82. Le flux de gaz inerte aspiré et le flux d'air comprimé se mélangent dans le côté sortie du convergent-divergent, comme indiqué par les flèches 85 et s'écoulent dans la canalisation 76 donnant sur l'extérieur de la cuve.

De préférence, une vanne non représentée est également prévue sur la canalisation de prélèvement 70 que l'on ouvre seulement après avoir établi un flux d'air comprimé stable à une vitesse appropriée dans la conduite principale 83. Ceci permet d'éviter un reflux d'air en direction de l'espace secondaire 6 lors de la phase de démarrage du flux d'air comprimé. On peut de la même manière fermer complètement ou partiellement cette vanne avant d'interrompre le flux de d'air comprimé ou pour réguler le débit/flux d'aspiration.

Avant de procédé aux étapes principales, on peut réduire le chauffage de l'espace confiné 4 au moins 3 heures avant la détection par thermographie. En effet, le chauffage pourrait masquer un éventuel point froid 43 sur la coque interne 2.

Ensuite, on s'assure que la pression de gaz dans la cuve 1, si elle est remplie d'un gaz liquéfié à basse température, est supérieure à 50 mbarg. Puis la valeur de la pression dans l'espace secondaire 6 est réduite pour atteindre une valeur comprise entre 1 mbarg et 5 mbarg en utilisant le dispositif d'aspiration et en ne laissant en position ouverte que la sortie secondaire 19 de gaz, toutes les autres entrées et sortie de gaz de l'espace secondaire 6 étant fermées. La sortie secondaire 19 de gaz est préférentiellement située sur le dôme liquide 15. Toutefois, on peut accélérer le processus en connectant le dispositif d'aspiration 80 à une deuxième sortie secondaire 20 de gaz de l'espace secondaire qui est alors mis en position ouverte. La deuxième sortie secondaire 20 de gaz est préférentiellement située sur le dôme liquide 15. Si cela ne devait pas suffire alors le dispositif d'aspiration 80 pourrait être connecté à une troisième sortie secondaire 23 de gaz de l'espace secondaire qui est alors aussi mise en position ouverte. La troisième sortie secondaire 23 de gaz est préférentiellement située sur le dôme liquide 15. Eventuellement il est possible d'utiliser un dispositif d'aspiration 80 pour chaque sortie de gaz de l'espace secondaire.

Après, on actionne le dispositif d'injection 45 pour injecter du diazote à partir de la source de gaz 71 dans l'espace primaire 8 à travers l'entrée primaire 18 de gaz pour que la valeur de la pression dans l'espace primaire 8 atteigne une valeur comprise entre 21 et 29 mbar au-dessus de la pression de l'espace secondaire 6. Seule l'entrée primaire 18 de gaz est laissée en position ouverte, toutes les autres entrées et sortie de gaz de l'espace primaire 8 étant fermées. Si cela n'est pas suffisant, le dispositif d'injection 45 pourra être aussi connecté à une deuxième entrée primaire 22 de gaz de l'espace primaire 8. Cette deuxième entrée primaire 22 de gaz peut être située au niveau du dôme gaz. Eventuellement, on attend alors la stabilisation de la pression. Cela peut durer entre 30 et 60 min.

Les pressions des espaces primaire et secondaire sont gérées dans les plages de pressions acceptables par des soupapes de sécurité (non représentées) des espaces primaire et secondaire.

On peut ensuite procéder à la mesure des températures sur la surface extérieure de la coque interne 2 par thermographie depuis l'espace confiné 4.

Une fois la mesure effectuée, les pressions des espaces sont remises à leur valeurs de conditions de fonctionnement normales ainsi que le chauffage de l'espace confiné 4.

En se référant à la figure 5, grâce à ce procédé, le gaz inerte est refroidi en passant dans l'espace primaire 8. Puis le gaz inerte refroidi traverse la membrane d'étanchéité secondaire 7 si elle présente des porosités anormales comme l'indiquent les flèches 27, 28 sur la figure 5. Le gaz inerte refroidi va alors créer un point froid 43 sur la coque intérieure 2. Une caméra thermique est alors utilisée pour détecter le point froid 43 potentiel sur la surface extérieure de la coque intérieure 2.

Pour mesurer la température de la surface extérieure de la coque interne 2 depuis l'espace confiné 4, un photodétecteur peut être utilisé tel qu'une caméra thermographique à capteur infrarouge du fait de l'étendue dont il faut mesurer la température. Elle enregistre les différents rayonnements infrarouges émis par la surface observée et qui varient en fonction de leur température. Par exemple, une caméra thermographique avec un capteur infrarouge refroidi peut être employée. Ce type de caméra utilise un conteneur refroidi par des techniques de cryogénie, le capteur pouvant être enfermé dans une enceinte sous vide. Cet abaissement ou cette régulation de la température du capteur peut s'avérer utile pour réduire le bruit thermique à un niveau inférieur à celui du signal de la scène filmée.

Typiquement, on peut utiliser une caméra thermographique à capteur infrarouge capable de détecter des longueurs d'onde comprises entre 7,5 et 13 $\mu$m, avec une sensibilité inférieure à 0,05 K sur un corps noir à 303K $\pm$ 10K et une précision inférieure à 2K sur un corps noir dans l'intervalle de 253K à 353K.

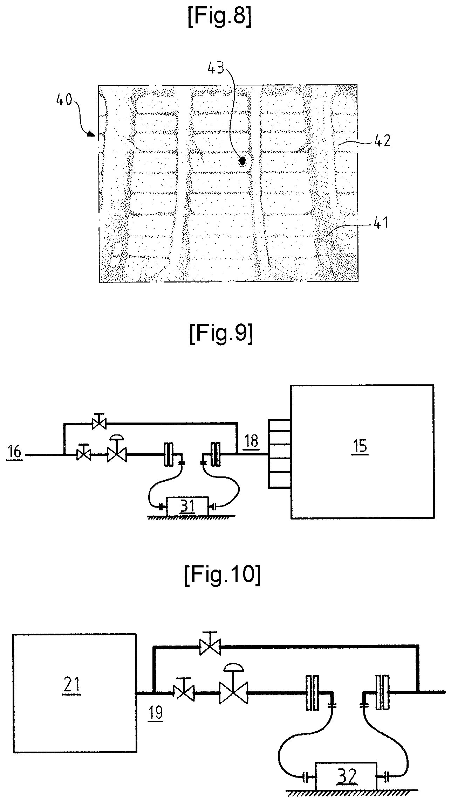

Sur la figure 8, un thermogramme 40 d'une partie d'une surface extérieure de la coque interne 2 obtenu grâce à une caméra thermographique à capteur infrarouge est illustré. Ce thermogramme 40 est une image dans laquelle à chaque point de l'image est affectée une valeur de température observée par la caméra thermographique à capteur infrarouge. Pour faciliter la détection visuelle des températures et donc faciliter la localisation d'un point froid sur la coque interne 2, une couleur représentant une température peut être affectée aux points du thermogramme. Ainsi on peut observer sur la figure 8 plusieurs couleurs, une première couleur 41 représente une température $T_1$, une deuxième couleur 42 représente une température $T_2$ et une troisième couleur 43 représente une température $T_3$. La température $T_1$ est supérieures à la température $T_2$, la température $T_2$ est supérieure à la température $T_1$. Etant donné la couleur observée 43, ici noire, bleue sur une image en couleur, la température $T_3$ est considérée comme un point froid.

Toutefois il est possible d'obtenir des points froids n'ayant pas pour origine un défaut d'étanchéité. Ils peuvent être dus à d'autres phénomènes ayant lieu dans l'espace secondaire tels que la conduction, la convection naturelle, la convection forcée ou la radiation. Pour les éliminer et affiner la détection de fuites dans la membrane d'étanchéité secondaire 7 les données obtenues avec la caméra thermographique peuvent être post-traitées. Ainsi le gradient de température représenté par le point froid doit respecter les deux conditions suivantes :

$$|\Delta T_{ultérieur}| < |\Delta T_{intermédiaire}| < |\Delta T_{principal}| \quad \text{et} \quad |\Delta T_{principal}| - |\Delta T_{ultérieur}| \geq 1 \text{ K}$$

Où $\Delta T_{ultérieur}$ désigne la différence de température entre la température d'un point de l'image mesurée à l'étape ultérieure et la température moyenne d'une zone de référence de l'extérieur de la coque interne mesurée à l'étape ultérieure,

Où $\Delta T_{intermédiaire}$ désigne la différence de température entre la température du point précédent de l'image mesurée à l'étape intermédiaire et la température moyenne d'une zone de référence de l'extérieur de la coque interne mesuré à l'étape intermédiaire,

Où $\Delta T_{principal}$ désigne la différence de température entre la température du point précédent de l'image mesurée à l'étape principale de mesure de température et la température moyenne d'une zone de référence de l'extérieur de la coque interne mesurée à l'étape principale,

les étapes préliminaire, ultérieure et intermédiaire étant explicitées ci-après.

Le procédé de contrôle de l'étanchéité d'une cuve peut comprendre une étape préliminaire dont le but est de s'assurer qu'il n'y a pas de point froid sur la coque interne dans des conditions normales de fonctionnement de la cuve. Elle peut aussi permettre de vérifier localement l'émissivité de la peinture de coque intérieure afin de déterminer les performances de mesure de la température.

Tout d'abord le chauffage l'espace confiné est réduit ou arrêté au moins 3 heures avant l'inspection. Les pressions des espaces primaire 8 et secondaire 6 sont maintenues conformément aux conditions de fonctionnement normales de la cuve, par exemple la pression de l'espace secondaire 6 est supérieure à la pression de l'espace primaire 8. Puis la coque intérieure 2 est complètement inspectée à l'aide d'une caméra thermique. Cela permet d'obtenir une image thermique de la coque interne 2 dans les conditions normales de fonctionnement de la cuve. À la fin de l'inspection, le système de l'espace confiné 4 est remis en remis en conditions de fonctionnement normales.

Afin de s'assurer que la cuve n'a pas été endommagée ou son état aggravé par les étapes principales, on effectue une étape ultérieure de mesure de température de la surface extérieure de la coque intérieure 2. Cette étape ultérieure est identique en tout point à l'étape préliminaire sur les conditions de déroulement. Si l'étape préliminaire a été effectuée, on pourra alors comparer les thermogrammes obtenus pour conclure sur l'état de la cuve en conditions normales de fonctionnement. Si l'étape préliminaire n'a pas été effectuée, on pourra alors s'assurer qu'il n'y a pas de point froid sur le thermogramme.

Enfin, le procédé peut aussi inclure une étape intermédiaire pour déterminer si la cuve est apte à subir les étapes principales. Ainsi l'étape intermédiaire peut se dérouler avant les étapes principales et après l'étape préliminaire. Cette étape consiste à mesurer la température de la surface extérieure de la coque interne (2) depuis l'espace confiné 4 lorsque différence de pression entre l'espace primaire 8 et l'espace secondaire 6 est comprise entre 800 Pa et 1200 Pa, l'espace primaire 8 étant en surpression de ladite différence de pression par rapport à l'espace secondaire 6

Avant de procédé à cette étape intermédiaire on pourra réduire le chauffage de l'espace confiné 4 au moins 3 heures avant la détection par thermographie. En effet, là aussi le chauffage pourrait masquer un éventuel point froid 43 sur la coque interne 2. Ensuite, on s'assure que la pression de gaz dans la cuve 1, si elle est remplie d'un gaz liquéfié à basse température, est supérieure à 50 mbarg. Puis la valeur de la pression dans l'espace secondaire 6 est réduite pour atteindre une valeur comprise entre 1 mbarg et 5 mbarg en utilisant le dispositif d'aspiration et en ne laissant en position ouverte que la sortie secondaire 19 de gaz. Après, on actionne le dispositif d'injection 45 pour injecter du diazote à partir de la source de gaz 71 dans l'espace primaire 8 à travers l'entrée primaire 18 de gaz pour que la valeur de la pression dans l'espace primaire 8 atteigne une valeur comprise entre 8 et 12 mbar au-dessus de la pression de l'espace secondaire 6. Seule l'entrée primaire 18 de gaz est laissée en position ouverte, toutes les autres entrées et sortie de gaz de l'espace primaire 8 étant fermées. Eventuellement, on attend alors la stabilisation de la pression. Cela peut durer entre 30 et 60 min. Les pressions des espaces primaire et secondaire sont gérée dans les plages de pression acceptable par des soupapes de sécurité (non représentées) des espaces primaire et secondaire. On peut ensuite procéder à la mesure des températures sur la surface extérieure de la coque interne 2 par thermographie depuis l'espace confiné 4. Une fois la mesure effectuée, les pressions des espaces sont remises à leur valeurs de conditions de fonctionnement normales ainsi que le chauffage de l'espace confiné 4.

Ainsi si le thermogramme obtenu à la suite de cette étape intermédiaire ne présente pas de points froids importants alors la cuve pourra subir les étapes principales du procédé.

En raison de la géométrie du dôme liquide 15 et du dôme gaz 21, le procédé décrit ci-dessus peut être mis en échec. En effet, les conditions climatiques extérieures et les champs de température dans et au voisinage de ces tourelles peuvent fausser les mesures de température avec la caméra thermographique et/ou être très complexes à prendre en compte dans le post-traitement des mesures de température. Le procédé peut être alors complété avec une mesure du flux d'azote traversant les fuites potentielles de la membrane d'étanchéité secondaire 7. Préférentiellement, le flux sera orienté de l'espace primaire vers l'espace secondaire.

Comme cette mesure consomme de l'azote, elle pourra être effectuée en parallèle des étapes précédentes, notamment des étapes principales. Toutefois, elle pourra être conduite après les étapes principales ou l'étape ultérieure.

Pour mesurer la consommation d'azote, des débitmètres sont installés. En référence à la figure 9, un premier débitmètre 31 est installé au dôme liquide 15. Le débitmètre 31 est installé sur la canalisation reliant la source de d'azote 16 et le l'entrée primaire 18 de gaz. Les autres entrées primaires sont mises en position fermée. Les sorties primaires sont elles aussi en position fermées. Ainsi le seul trajet possible du flux d'azote est de passer vers l'espace secondaire si la membrane d'étanchéité secondaire 7 présente une porosité anormale. Ce débitmètre permettra donc de mesurer le flux d'azote entrant dans l'espace primaire.

Afin de faciliter le montage et le démontage du débitmètre 31, on pourra prévoir un circuit de tuyaux montés en série avec des vannes comme illustré en sur la figure 9 avec une vanne sur une première branche, cette vanne étant fermée pour obtenir une mesure de débit correcte, et une vanne et le débitmètre 31 sur une deuxième branche.

En référence à la figure 10, un deuxième débitmètre 32 est installé, il est placé au niveau de la sortie secondaire 19 de gaz de l'espace secondaire 6 située sur le dôme gaz 21. Les entrées secondaires et les autres sorties secondaires sont en position fermées. Ainsi le débitmètre mesure bien le flux d'azote passant de l'espace primaire 8 à l'espace secondaire 6 via une porosité anormale de la membrane d'étanchéité secondaire 7.

Avec cette disposition, on s'assure que le flux d'azote passe par les débitmètres et on évite les pertes d'information. Il est à noter que l'emplacement des débitmètres peut être différent sur chaque navire.

Afin de faciliter le montage et le démontage du débitmètre 32, on pourra prévoir un circuit de tuyaux montés en parallèle avec des vannes comme illustré en sur la figure 10 avec une vanne sur une première branche, et une vanne et le débitmètre 32 sur une deuxième branche, cette vanne étant fermée pour obtenir une mesure de débit correcte.

Avant l'installation des débitmètres, on s'assure que les pressions dans les espaces primaire et secondaire sont normales c'est-à-dire les pressions observées dans les conditions normales de fonctionnement. La pression de vapeur dans la cuve, si elle est remplie de gaz liquéfié à basse température, doit être maintenue au-dessus de 50 mbarg, préférentiellement au-dessus de 100 mbarg. Ensuite les entrées primaires et secondaires, et les sorties primaires et secondaires pouvant influencer la mesure du flux d'azote sont mises en position fermée. Puis les débitmètres sont installés, le premier 31 est mis à l'entrée primaire 18 de gaz et le deuxième 32 est mis à la sortie secondaire 19 de gaz ou à la deuxième sortie secondaire 20 de gaz. Une fois les débitmètres 31, 32 montés, on alimente l'espace primaire 8 en azote tout en régulant cette alimentation à l'aide d'une vanne, par exemple jusqu'à 12 m$^3$/h (mètre cube par heure). Alors on débute la mesure des débits entrant dans l'espace primaire et sortant de l'espace secondaire avec les débitmètres. Le contrôle et la mesure des débits à l'entrée primaire 18 de gaz et à la sortie secondaire 19 de gaz dure au maximum 5 heures, préférentiellement 3 heures.

A la fin des mesures, les débits à l'entrée primaire 18 de gaz et à la sortie secondaire 19 de gaz sont comparés. Si les mesures sont similaires, alors la membrane d'étanchéité secondaire 7 présente bien une porosité anormale, notamment au niveau du dôme liquide et/ou dôme gaz. En revanche si les débits sont fortement différents voire le débit à la sortie secondaire de gaz est nul alors la membrane d'étanchéité secondaire 7 ne présente pas de porosité anormale où que ce soit.

L'installation décrite ci-dessus et exploitant le procédé décrit ci-dessus peut être utilisée par exemple dans une installation terrestre ou dans un ouvrage flottant comme un navire méthanier ou autre.

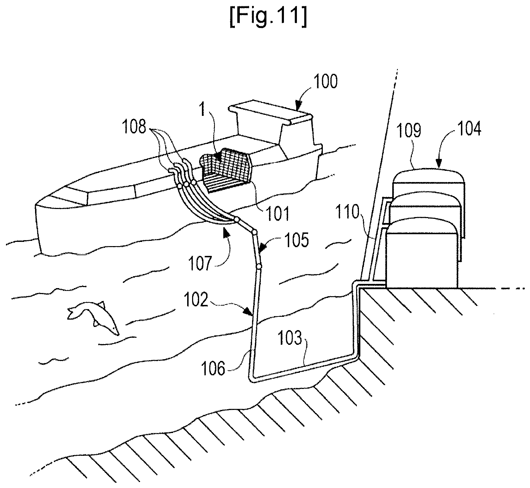

En référence à la figure 11, une vue écorchée d'un navire méthanier 100 montre une installation de stockage d'un gaz liquéfiée à basse température comportant une cuve étanche et isolée 1 de forme générale prismatique montée dans la double coque 101 du navire. La cuve 1 comporte une membrane d'étanchéité primaire destinée à être en contact avec le gaz liquéfié à basse température GNL contenu dans la cuve tel que du GNL, une membrane d'étanchéité secondaire agencée entre la membrane d'étanchéité primaire et la double coque 101 du navire, et deux barrières isolante agencées respectivement entre la membrane d'étanchéité primaire et la membrane d'étanchéité secondaire et entre la membrane d'étanchéité secondaire et la double coque 101.

En référence à la figure 11, une vue écorchée d'un navire méthanier 100 montre une installation de stockage d'un gaz liquéfiée à basse température comportant une cuve étanche et isolée 1 de forme générale prismatique montée dans la double coque 101 du navire. La cuve 1 comporte une membrane d'étanchéité primaire destinée à être en contact avec le gaz liquéfié à basse température GNL contenu dans la cuve tel que du GNL, une membrane d'étanchéité secondaire agencée entre la membrane d'étanchéité primaire et la double coque 101 du navire, et deux barrières isolante agencées respectivement entre la membrane d'étanchéité primaire et la membrane d'étanchéité secondaire et entre la membrane d'étanchéité secondaire et la double coque 101.

La figure 11 représente un exemple de terminal maritime comportant un poste de chargement et de déchargement 102, une conduite sous-marine 103 et une installation à terre 104. Le poste de chargement et de déchargement 102 est une installation fixe offshore comportant un bras mobile 105 et une tour 106 qui supporte le bras mobile 105. Le bras mobile 105 porte un faisceau de tuyaux flexibles isolés 107 pouvant se connecter aux canalisations de chargement/déchargement 108. Le bras mobile 105 orientable s'adapte à tous les gabarits de méthaniers. Une conduite de liaison non représentée s'étend à l'intérieur de la tour 106. Le poste de chargement et de déchargement 102 permet le chargement et le déchargement du navire 100 depuis ou vers l'installation à terre 104. Celle-ci comporte des cuves de stockage de gaz liquéfié à basse température 109 et des conduites de liaison 110 reliées par la conduite sous-marine 103 au poste de chargement et de déchargement 102. La conduite sous-marine 103 permet le transfert du gaz liquéfié à basse température entre le poste de chargement et de déchargement 102 et l'installation à terre 104 sur une grande distance, par exemple 5 km, ce qui permet de garder le navire 100 à grande distance de la côte pendant les opérations de chargement et de déchargement.

Pour engendrer la pression nécessaire au transfert du gaz liquéfié à basse température, on met en œuvre des pompes embarquées dans le navire 100 et/ou des pompes équipant l'installation à terre 104 et/ou des pompes équipant le poste de chargement et de déchargement 102.

**Revendications**

1. Procédé de contrôle de l'étanchéité d'une cuve (1) étanche et thermiquement isolante de stockage d'un gaz liquéfié à basse température (30), la cuve (1) étant à basse température (30), la cuve étanche et thermiquement isolante (1) comportant une structure porteuse présentant une coque interne (2) et une coque externe (3), un espace confiné (4) entre la coque interne (2) et la coque externe (3), une membrane d'étanchéité primaire (9) destinée à être en contact avec le gaz liquéfié à basse température (30) contenu dans la cuve (1), et une membrane d'étanchéité secondaire (7) agencée entre la membrane d'étanchéité primaire (9) et la coque interne (2), un espace primaire (8) entre la membrane d'étanchéité primaire (9) et la membrane d'étanchéité secondaire (7) et un espace secondaire (6) entre la membrane d'étanchéité secondaire (7) et la coque interne (2), l'espace primaire (8) et l'espace secondaire (6) comprenant des matériaux isolants, l'espace primaire (8) comprenant une entrée primaire (18) de gaz et une sortie primaire (26) de gaz, l'espace secondaire (6) comprenant une entrée secondaire (25) de gaz et une sortie secondaire (19) de gaz, ladite membrane d'étanchéité primaire reposant directement sur les matériaux isolants contenus dans l'espace primaire et ladite membrane d'étanchéité secondaire reposant directement sur les matériaux isolants contenus dans l'espace secondaire, le procédé comprenant les étapes suivantes :

   - générer une pression inférieure à la pression de l'espace primaire (8) dans l'espace secondaire (6) grâce à un dispositif d'aspiration (80) relié à la sortie secondaire (19) de gaz,
   - dans une étape intermédiaire, mesurer la température de la surface extérieure de la coque interne (2) depuis l'espace confiné (4) lorsqu'une différence de pression entre l'espace primaire (8) et l'espace secondaire (6) est comprise entre 800 Pa et 1200 Pa, l'espace primaire (8) étant en surpression de ladite différence de pression par rapport à l'espace secondaire (6),
   - dans une étape principale de mesure de température, mesurer la température d'une surface extérieure de la coque interne (2) depuis l'espace confiné (4) situé autour de la coque interne (2), la différence de pression entre l'espace primaire (8) et l'espace secondaire (6) étant comprise entre 2100 Pa et 2900 Pa, l'espace primaire (8) étant en surpression de ladite différence de pression par rapport à l'espace secondaire (6),
   - détecter la localisation d'un défaut d'étanchéité de la membrane d'étanchéité secondaire (7) sous la forme d'un point froid (43) sur la surface extérieure de la coque interne (2) mesuré lors de l'étape principale de mesure de température,

   le procédé comprenant une étape ultérieure à l'étape principale de mesure de température consistant à :

   - mesurer la température de la surface extérieure de la coque interne (2) depuis l'espace confiné (4) dans des conditions normales de fonctionnement de la cuve dans lesquelles la pression de l'espace primaire est sélectionnée parmi une pression inférieure de 200 à 700 Pa à la pression de l'espace secondaire et une pression supérieure de 0 à 400 Pa à la pression de l'espace secondaire.

2. Procédé selon la revendication 1, comprenant en outre :

   - injecter un gaz inerte dans l'espace primaire (8) à partir de l'entrée primaire (18) de gaz.

3. Procédé selon la revendication précédente, dans lequel l'injection de gaz inerte est effectuée par un compresseur (45).

4. Procédé selon l'une des revendications 2 et 3, dans lequel l'injection de gaz inerte est effectuée à une pression comprise entre 3 et 8 bars.

5. Procédé selon l'une revendications précédentes, comprenant en outre une étape préliminaire consistant à :

   - mesurer la température de la surface extérieure de la coque interne (2) depuis l'espace confiné (4) dans des conditions normales de fonctionnement de la cuve.

6. Procédé selon la revendication précédente, dans lequel les pressions de l'espace primaire (8) et de l'espace secondaire (6) sont maintenues stables pendant l'étape de mesure de la température de la surface extérieure de la coque interne (2) lors de l'étape principale de mesure de température et de l'étape intermédiaire de mesure de température.

7. Installation de stockage flottante ou terrestre d'un gaz liquéfié à basse température (30) comportant :

- une cuve étanche et thermiquement isolante (1) à basse température (30) comportant une structure porteuse présentant une coque interne (2) et une coque externe (3), l'espace entre la coque interne (2) et la coque externe (3) étant appelé espace confiné (4), une membrane d'étanchéité primaire (9) destinée à être en contact avec le gaz liquéfié à basse température (30) contenu dans la cuve, et une membrane d'étanchéité secondaire (7) agencée entre la membrane d'étanchéité primaire (9) et la coque interne (2), l'espace entre la membrane d'étanchéité primaire (9) et la membrane d'étanchéité secondaire (7) est appelé espace primaire (8) et l'espace entre la membrane d'étanchéité secondaire (7) et la coque interne (2) est appelé espace secondaire (6), l'espace primaire (8) et l'espace secondaire (6) comprenant des matériaux isolants, l'espace primaire (8) comprenant une entrée primaire (18) de gaz et une sortie primaire (26) de gaz, l'espace secondaire (6) comprenant une entrée secondaire (25) et une sortie secondaire (19) de gaz, ladite membrane d'étanchéité primaire reposant directement sur les matériaux isolants contenus dans l'espace primaire et ladite membrane d'étanchéité secondaire reposant directement sur les matériaux isolants contenus dans l'espace secondaire,
- un réservoir de gaz inerte (16) agencé de manière à injecter le gaz inerte dans l'espace primaire (8),
- un dispositif d'injection (45) apte à injecter le gaz inerte du réservoir de gaz inerte (16) par l'entrée primaire (18) de gaz, et ainsi à mettre sous pression l'espace primaire (8) par rapport à l'espace secondaire (6),
- un dispositif d'aspiration (80) connecté à la sortie secondaire (19) de gaz pour créer une pression inférieure à la pression atmosphérique dans l'espace secondaire (6), dans lequel le dispositif d'injection (45) et le dispositif d'aspiration (80) sont configurés pour qu'une différence de pression entre l'espace primaire (8) et l'espace secondaire (6) dans une étape intermédiaire soit comprise entre 800 Pa et 1200 Pa, l'espace primaire (8) étant en surpression de ladite différence de pression par rapport à l'espace secondaire (6), et pour qu'une différence de pression entre l'espace primaire (8) et l'espace secondaire (6) dans une étape principale soit comprise entre 2100 Pa et 2900 Pa, l'espace primaire (8) étant en surpression de ladite différence de pression par rapport à l'espace secondaire (6),
- un dispositif de mesure de température configuré pour mesurer une température de la surface extérieure de la coque interne (2) depuis l'espace confiné (4) dans ladite étape intermédiaire, dans une étape principale de mesure de température, et dans une étape ultérieure dans les conditions normales de fonctionnement de la cuve dans lesquelles la pression de l'espace primaire est sélectionnée parmi une pression inférieure de 200 à 700 Pa à la pression de l'espace secondaire et une pression supérieure de 0 à 400 Pa à la pression de l'espace secondaire,
- un système d'affichage des mesures de température afin de localiser un défaut **d'étanchéité** de la membrane d'étanchéité secondaire (7) sous la forme d'un point froid (43) sur la surface extérieure de la coque interne (2) mesuré lors de l'étape principale de mesure de température.

8. Installation selon la revendication précédente, dans laquelle le dispositif d'aspiration est un système d'aspiration par effet Venturi (80) comprenant une conduite principale (83) présentant une entrée apte à être reliée à une source de gaz (71) sous pression et une sortie vers l'extérieur de la cuve (1) , une conduite d'aspiration (81) présentant un côté amont apte à être relié au port de sortie de l'espace secondaire (6) et un côté aval débouchant latéralement dans un convergent-divergent de la conduite principale (83) de manière à ce qu'un flux de gaz dans la conduite principale (83) produise une dépression dans la conduite d'aspiration (81).

9. Installation selon la revendication précédente, dans laquelle la conduite d'aspiration (81) est reliée à la sortie secondaire (19) de gaz.

10. Installation selon l'une des revendications 8 ou 9, dans laquelle la source de gaz (71) sous pression est un circuit d'air comprimé.

11. Installation selon l'une des revendications 7 à 10, dans laquelle le dispositif d'injection (45) est un compresseur apte à injecter le gaz inerte à une pression comprise entre 3 et 8 bars.

12. Navire (100) pour le transport d'un gaz liquéfié à basse température (30), le navire comportant une installation de stockage d'un gaz liquéfié à basse température (30) selon l'une des revendications 7 à 11.


**Patentansprüche**

1. Verfahren zur Dichtheitsprüfung eines dichten und wärmeisolierenden Behälters (1) zur Lagerung eines tiefkalten verflüssigten Gases (30), wobei der Behälter (1) eine niedrige Temperatur (30) aufweist, wobei der dichte und wärmeisolierende Behälter eine Stützstruktur mit einer Innenschale (2) und einer Außenschale (3), einen begrenzten Raum (4) zwischen der Innenschale (2) und der Außenschale (3), eine erste Dichtmembran (9), bestimmt für den Kontakt mit dem im Behälter (1) enthaltenen tiefkalten verflüssigten Gas (30), und eine zweite zwischen der ersten Dichtmembran (9) und der Innenschale (2) angeordnete Dichtmembran (7), einen ersten Raum (8) zwischen der ersten Dichtmembran (9) und der zweiten Dichtmembran (7) und einen zweiten Raum (6) zwischen der zweiten Dichtmembran (7) und der Innenschale (2) umfasst, wobei der erste Raum (8) und der zweite Raum (6) Isoliermaterialien enthalten, wobei der erste Raum (8) einen ersten Gaseinlass (18) und einen ersten Gasauslass (26) umfasst, wobei der zweite Raum (6) einen zweiten Gaseinlass (25) und einen zweiten Gasauslass (19) umfasst, wobei die erste Dichtmembran direkt auf den im ersten Raum enthaltenen Isoliermaterialien aufliegt und die zweite Dichtmembran direkt auf den im zweiten Raum enthaltenen Isoliermaterialien aufliegt, wobei das Verfahren die folgenden Schritte umfasst:

- Erzeugen eines Drucks im zweiten Raum (6), der niedriger ist als der Druck im ersten Raum (8) durch eine Saugvorrichtung (80), die mit dem zweiten Gasauslass (19) verbunden ist,
- in einem Zwischenschritt die Temperatur der Außenfläche der Innenschale (2) von dem begrenzten Raum (4) aus messen, wenn die Druckdifferenz zwischen dem ersten Raum (8) und dem zweiten Raum (6) zwischen 800 Pa und 1200 Pa liegt, wobei der erste Raum (8) gegenüber dem zweiten Raum (6) einen Überdruck in Höhe dieser Druckdifferenz aufweist,
- in einem Hauptschritt der Temperaturmessung die Temperatur der Außenfläche der Innenschale (2) von dem um die Innenschale (2) herum angeordneten begrenzten Raum (4) aus messen, wobei die Druckdifferenz zwischen dem ersten Raum (8) und dem zweiten Raum (6) zwischen 2100 Pa und 2900 Pa liegt und der erste Raum (8) gegenüber dem zweiten Raum (6) einen Überdruck in Höhe dieser Druckdifferenz aufweist,
- Auffinden der Stelle einer Undichtigkeit der zweiten Dichtmembran (7) in Form eines kalten Punktes (43) auf der Außenfläche der Innenschale (2), gemessen während des Hauptschrittes der Temperaturmessung,

wobei das Verfahren einen weiteren Schritt nach dem Hauptschritt der Temperaturmessung umfasst, der besteht im:

- Messen der Temperatur der Außenfläche der Innenschale (2) von dem begrenzten Raum (4) aus unter normalen Betriebsbedingungen des Behälters, bei denen der Druck des ersten Raums zwischen einem Unterdruck von 200 bis 700 Pa zum zweiten Raum und einem Überdruck von 0 bis 400 Pa zum zweiten Raum gewählt wird.

2. Verfahren nach Anspruch 1, das außerdem umfasst:

- Einleiten eines Inertgases in den ersten Raum (8) aus dem ersten Gaseinlass (18).

3. Verfahren nach dem vorhergehenden Anspruch, wobei das Einleiten des Inertgases durch einen Kompressor (45) erfolgt.

4. Verfahren nach einem der Ansprüche 2 und 3, wobei das Einleiten des Inertgases bei einem Druck zwischen 3 und 8 bar erfolgt.

5. Verfahren nach einem der vorstehenden Ansprüche, das zusätzlich einen vorbereitenden Schritt umfasst, der darin besteht:

- die Temperatur der Außenfläche der Innenschale (2) von dem begrenzten Raum (4) aus unter normalen Betriebsbedingungen des Behälters zu messen.

6. Verfahren nach dem vorhergehenden Anspruch, bei dem die Drücke des ersten Raums (8) und des zweiten Raums (6) während des Schritts der Temperaturmessung der Außenfläche der Innenschale (2) im Hauptschritt der Temperaturmessung und im Zwischenschritt der Temperaturmessung stabil gehalten werden.

7. Schwimmende oder landgestützte Anlage zur Lagerung von Flüssiggas (30) bei niedriger Temperatur, umfassend:

- einen dichten und wärmeisolierenden Behälter (1) für niedrige Temperatur(30) mit einer Stützstruktur, die eine Innenschale (2) und eine Außenschale (3) aufweist, wobei der Raum zwischen der Innenschale (2) und der Außenschale (3) als geschlossener Raum (4) bezeichnet wird, eine erste Dichtmembran (9), bestimmt für den Kontakt mit dem im Behälter enthaltenen tiefkalten verflüssigten Gas (30), und eine zwischen der ersten Dichtmembran (9) und der Innenschale (2) angeordnete zweite Dichtmembran (7), wobei der Raum zwischen der ersten Dichtmembran (9) und der zweiten Dichtmembran (7) als erster Raum (8) bezeichnet wird und der Raum zwischen der zweiten Dichtmembran (7) und der Innenschale (2) als zweiter Raum (6) bezeichnet wird, wobei der erste Raum (8) und der zweite Raum (6) Isoliermaterialien enthalten, der erste Raum (8) einen ersten Gaseinlass (18) und einen ersten Gasauslass (26) umfasst, wobei der zweite Raum (6) einen zweiten Gaseinlass (25) und einen zweiten Gasauslass (19) umfasst, wobei die erste Dichtmembran direkt auf den im ersten Raum enthaltenen Isoliermaterialien aufliegt und die zweite Dichtmembran direkt auf den im zweiten Raum enthaltenen Isoliermaterialien aufliegt,

- ein Inertgasreservoir (16), das so angeordnet ist, dass es das Inertgas in den ersten Raum (8) einspeist,
- eine Einspeisevorrichtung (45), die dazu geeignet ist, das Inertgas aus dem Inertgasreservoir (16) durch den ersten Gaseinlass (18) einzuspeisen und so den ersten Raum (8) gegenüber dem zweiten Raum (6) unter Druck zu setzen,
- eine mit dem zweiten Gaseinlass (19) verbundene Absaugvorrichtung (80), um im zweiten Raum (6) einen Unterdruck zum atmosphärischen Druck zu erzeugen, wobei die Einspeisevorrichtung (45) und die Absaugvorrichtung (80) so konfiguriert sind, dass die Druckdifferenz zwischen dem ersten Raum (8) und dem zweiten Raum (6) in einem Zwischenschritt zwischen 800 Pa und 1200 Pa liegt, wobei der erste Raum (8) gegenüber dem zweiten Raum (6) einen Überdruck in Höhe dieser Druckdifferenz aufweist, und so, dass die Druckdifferenz zwischen dem ersten Raum (8) und dem zweiten Raum (6) in einem Hauptschritt zwischen 2100 Pa und 2900 Pa liegt, wobei der erste Raum (8) gegenüber dem zweiten Raum (6) einen Überdruck in Höhe dieser Druckdifferenz aufweist,
- eine Temperaturmessvorrichtung, so eingerichtet, dass sie in dem genannten Zwischenschritt, in einem Hauptschritt der Temperaturmessung und in einem späteren Schritt die Temperatur der Außenfläche der Innenschale (2) von dem begrenzten Raum (4) aus misst, und zwar unter normalen Betriebsbedingungen des Behälters, wobei der Druck des ersten Raums zwischen einem Unterdruck von 200 bis 700 Pa zum zweiten Raum und einem Überdruck von 0 bis 400 Pa zum Druck des zweiten Raums gewählt wird,
- ein System zur Anzeige der Temperaturmessungen, um eine Undichtigkeit der zweiten Dichtmembran (7) in Form eines kalten Punktes (43) auf der Außenfläche der Innenschale (2) zu lokalisieren, der während des Hauptschritts der Temperaturmessung gemessen wird.

8. Anlage nach dem vorstehenden Anspruch, wobei die Absaugvorrichtung ein Venturi-Absaugsystem (80) ist, das eine Hauptleitung (83) mit einem Einlass, der an eine Druckgasquelle (71) angeschlossen werden kann, und einem Auslass zum Außenbereich des Behälters (1) umfasst, wobei eine Saugleitung (81) mit einem stromaufwärtigen Ende, das mit dem Auslass des zweiten Raums (6) verbunden werden kann, und einem stromabwärtigen Ende, das seitlich in einen konvergenten-divergenten Abschnitt der Hauptleitung (83) mündet, so dass ein Gasstrom in der Hauptleitung (83) einen Unterdruck in der Saugleitung (81) erzeugt.

9. Anlage nach dem vorstehenden Anspruch, wobei die Saugleitung (81) mit dem zweiten Gasauslass (19) verbunden ist.

10. Anlage nach einem der Ansprüche 8 oder 9, wobei die Druckgasquelle (71) ein Druckluftkreislauf ist.

11. Anlage nach einem der Ansprüche 7 bis 10, wobei die Einspeisevorrichtung (45) ein Kompressor ist, der das Inertgas mit einem Druck zwischen 3 und 8 bar einspeisen kann.

12. Schiff (100) zum Transport von tiefkalt verflüssigtem Gas (30), wobei das Schiff eine Anlage zur Lagerung von tiefkalt verflüssigtem Gas (30) gemäß einem der Ansprüche 7 bis 11 umfasst.

## Claims

1. A method for checking the sealing of a sealed and thermally insulating tank (1) for storing a liquefied gas at low temperature (30), the tank (1) being at low temperature (30), the sealed and thermally insulating tank (1) comprising a carrier structure which has an inner hull (2) and an outer hull (3), a confined space (4) between the inner hull (2) and the outer hull (3), a primary sealing membrane (9) which is intended to be in contact with the liquefied gas at low temperature (30) contained in the tank (1), and a secondary sealing membrane (7) which is arranged between the primary sealing membrane (9) and the inner hull (2), a primary space (8) between the primary sealing membrane (9) and the secondary sealing membrane (7) and a secondary space (6) between the secondary sealing membrane (7) and the inner hull (2), the primary space (8) and the secondary space (6) comprising insulating materials, the primary space (8) comprising a primary gas inlet (18) and a primary gas outlet (26), the secondary space (6) comprising a secondary gas inlet (25) and a secondary gas outlet (19), the primary sealing membrane resting directly on the insulating materials contained in the primary space and the secondary sealing membrane resting directly on the insulating materials contained in the secondary space, the method comprising the following steps:

- generating a pressure lower than the pressure of the primary space (8) in the secondary space (6) using a suction device (80) which is connected to the secondary gas outlet (19),
- in an intermediate step, measuring the temperature of the outer surface of the inner hull (2) from the confined space (4) when the pressure difference between the primary space (8) and the secondary space (6) is between 800 Pa and 1200 Pa, the primary space (8) being under excess pressure by the pressure difference compared with the secondary space (6),

- in a main temperature measurement step, measuring the temperature of an outer surface of the inner hull (2) from the confined space (4) located around the inner hull (2), the pressure difference between the primary space (8) and the secondary space (6) being between 2100 Pa and 2900 Pa, the primary space (8) being under excess pressure by the pressure difference compared with the secondary space (6),
- detecting the location of a sealing defect of the secondary sealing membrane (7) in the form of a cold spot (43) on the outer surface of the inner hull (2), measured during the main temperature measurement step,

the method further comprising a subsequent step after the main temperature measurement step which involves:

- measuring the temperature of the outer surface of the inner hull (2) from the confined space (4) under normal operating conditions of the tank, wherein the pressure of the primary space is selected among a pressure lower than the pressure of secondary space by 200 to 700 Pa and a pressure greater than the pressure of the secondary space, by 0 to 400 Pa.

2. The method as claimed in claim 1, further comprising:

- injecting an inert gas into the primary space (8) from the primary gas inlet (18).

3. The method as claimed in the preceding claim, wherein the injection of inert gas is carried out by a compressor (45).

4. The method as claimed in one of claims 2 and 3, wherein the injection of inert gas is carried out at a pressure between 3 and 8 bar.

5. The method as claimed in one of the preceding claims, further comprising a preliminary step which involves:

- measuring the temperature of the outer surface of the inner hull (2) from the confined space (4) under normal operating conditions of the tank.

6. The method as claimed in the preceding claim, wherein the pressures of the primary space (8) and the secondary space (6) are kept stable during the step of measuring the temperature of the outer surface of the inner hull (2) during the main temperature measurement step and the intermediate temperature measurement step.

7. A floating or onshore storage installation for a liquefied gas at low temperature (30) comprising:

- a sealed and thermally insulated tank (1) at low temperature (30) comprising a carrier structure which has an inner hull (2) and an outer hull (3), the space between the inner hull (2) and the outer hull (3) being referred to as the confined space (4), a primary sealing membrane (9) which is intended to be in contact with the liquefied gas at low temperature (30) contained in the tank, and a secondary sealing membrane (7) which is arranged between the primary sealing membrane (9) and the inner hull (2), the space between the primary sealing membrane (9) and the secondary sealing membrane (7) is referred to as the primary space (8) and the space between the secondary sealing membrane (7) and the inner hull (2) is referred to as the secondary space (6), the primary space (8) and the secondary space (6) comprising insulating materials, the primary space (8) comprising a primary gas inlet (18) and a primary gas outlet (26), the secondary space (6) comprising a secondary gas inlet (25) and a secondary gas outlet (19), the primary sealing membrane resting directly on the insulating materials contained in the primary space and the secondary sealing membrane resting directly on the insulating materials contained in the secondary space,
- an inert gas reservoir (16) which is arranged in order to inject the inert gas into the primary space (8),
- an injection device (45) which is capable of injecting the inert gas of the inert gas reservoir (16) via the primary gas inlet (18), and thus placing the primary space (8) under pressure relative to the secondary space (6),
- a suction device (80) which is connected to the secondary gas outlet (19) in order to generate a pressure lower than atmospheric pressure in the secondary space (6), wherein the injection device (45) and the suction device (80) are arranged so that a pressure difference between the primary space (8) and the secondary space (6) in an intermediate step is comprised between 800 Pa and 1200 Pa, the primary space (8) being under excess pressure by the pressure difference compared with the secondary space (6), and so that a pressure difference between the primary space (8) and the secondary space (6) is between 2100 Pa and 2900 Pa, the primary space (8) being under excess pressure by the pressure difference compared with the secondary space (6),
- a temperature measurement device arranged to measure a temperature of the outer surface of the inner hull (2), from the confined space (4) in said intermediate step, in a main temperature measurement step, and in an ulterior step under normal operating conditions of the tank, wherein the pressure of the primary space is selected among a pressure lower than the pressure of the secondary space by 200 to 700 Pa and a pressure greater than the pressure of the secondary space, by 0 to 400 Pa,
- a system for displaying the temperature measurements in order to locate a sealing defect of the secondary sealing membrane (7) in the form of a cold spot (43) on the outer surface of the inner hull (2), measured during the main temperature measurement step.

8. The installation as claimed in the preceding claim, wherein the suction device is a Venturi effect suction system (80) which comprises a main pipe (83) which has an inlet which is capable of being connected to a pressurized gas source (71), and an outlet toward the outer side of the tank (1), a suction pipe (81) having an upstream side which is capable of being connected to the outlet port of the secondary space (6) and a downstream side which opens laterally in a convergent/divergent section of the main pipe (83) so that a gas flow in the main pipe (83) produces a reduced pressure in the suction pipe (81).

9. The installation as claimed in the preceding claim, wherein the suction pipe (81) is connected to the secondary gas outlet (19).

10. The installation as claimed in claim 8 or 9, wherein the pressurized gas source (71) is a compressed air circuit.

11. The installation as claimed in one of claims 7 to 10, wherein the injection device (45) is a compressor which is capable of injecting the inert gas at a pressure between 3 and 8 bar.

12. A vessel (100) for transporting a liquefied gas at low temperature (30), the vessel comprising an installation for storing a liquefied gas at low temperature (30) as claimed in one of claims 7 to 11.

[Fig.1]

[Fig.2]

[Fig.3]

[Fig.4]

[Fig.5]

[Fig.6]

[Fig.7]

[Fig.8]

[Fig.9]

[Fig.10]

[Fig.11]

## RÉFÉRENCES CITÉES DANS LA DESCRIPTION

**Documents brevets cités dans la description**

- FR 2946428
- FR 2294439
- GB 888247 A

- FR 25153747 A1
- EP 0102865 A1
- FR 2202595